# EUROPÄISCHE PATENTSCHRIFT

(11) **EP 2 499 383 B1**
(45) Veröffentlichungstag und Bekanntmachung des Hinweises auf die Patenterteilung: **08.10.2014**
(21) Anmeldenummer: 10805404.0
(22) Anmeldetag: 10.11.2010
(51) Int. Cl.: F16C 7/06, F16B 7/06

(54) **ZUG-DRUCK-STANGE**
TRACTION-PRESSURE ROD
BARRE DE TRACTION-COMPRESSION

(30) Priorität: 10.11.2009 AT 17812009; 13.07.2010 EP 10169361; 21.10.2010 DE 202010008858 U
(43) Veröffentlichungstag der Anmeldung: 19.09.2012
(73) Patentinhaber: RO-RA Produktions GmbH, 4862 Schörfling a. Attersee (AT)
(72) Erfinder: HALLER, Matthias, A-4862 Schörfling a. Attersee (AT)
(74) Vertreter: Lösch, Christoph Ludwig Klaus
(86) Internationale Anmeldenummer: PCT/DE2010/075128
(87) Internationale Veröffentlichungsnummer: WO 2011/057627

(56) Entgegenhaltungen:
- EP-A2- 1 588 975
- DE-A1-102008 013 017
- FR-A- 460 408
- GB-A- 524 717
- US-A- 2 352 585
- US-A- 2 810 595
- US-B1- 6 902 342

## Beschreibung

Die Erfindung betrifft eine Zug-Druck-Stange, wie diese im Oberbegriff des Anspruchs 1 beschrieben ist.

Aus der GB 0 524 717 A ist eine Zug-Druck-Stange bekannt geworden, welche gemäß der Darstellung in der Fig. 3 ein zentrales Mittelteil mit Innengewinden aufweist und von beiden in Axialrichtung voneinander distanzierten Enden jeweils ein Gewindeschaft mit einem daran angeordneten und damit verbundenen Kupplungselement eingeschraubt ist. Die jeweils zusammenwirkenden Gewindeanordnungen sind einmal als Links- und einmal als Rechtsgewinde ausgebildet. Zusätzlich ist der zentrale Mittelteil jeweils von einer an den Kupplungselementen angeordneten, rohrförmigen Hülse bereichsweise umgeben, um so einen Zutritt von Schmutz oder Verunreinigungen hin zu den Gewindeanordnungen zu vermeiden. An jedem der beiden Schaftenden ist eine eigene Rastvorrichtung vorgesehen, welche ihrerseits in Axialrichtung gesehen, jeweils einander zugewendete sowie zusammenwirkende erste und zweite Rastelemente sowie ein Federelement umfasst. Das Federelement ist am Schaftende an einer eigens zu montierenden Scheibe abgestützt und drückt die beiden Rastelemente in Axialrichtung gegeneinander. Die Rastelemente sind hier durch in Axialrichtung aufeinander zugerichtete Zähne gebildet. Das erste Rastelemente ist einstückig mit dem Schaft ausgebildet und das zweite Element ist drehfest mit dem zentralen Mittelteil gekuppelt. Dazu weist dieser eine sich in Axialrichtung erstreckende Nut auf, in welche ein am Rastelement angeordneter Kulissenstein eingreift.

Eine andere als Abhängeelement ausgebildete Zug-Druck-Stange ist aus der EP 1 588 975 A2 bekannt geworden. Dieses Abhängeelement umfasst zwei Befestigungselemente, welche jeweils einen Schaft aufweisen, wobei wenigstens ein Schaft ein Gewinde aufweist. Weiters umfasst das Abhängeelement ein Mittelelement, welches in wenigstens einer der Stirnflächen eine Gewindehülse aufweist und in welche an den sich gegenüberliegenden Stirnflächen die Befestigungselemente eingreifen. Wenigstens einer der Schafte, welche ein Gewinde aufweisen, ist an seiner Stirnfläche mit einer Zahnscheibe mit radial verlaufenden Zähnen versehen, welche in auf der Stirnfläche der Gegenzahnscheibe angeordnete radial verlaufende Zähne eingreifen. Die Gegenzahnscheibe ist an ihrer Rückfläche mit einem Federelement beaufschlagt. Zur gegenseitigen Verdrehsicherung der beiden Zahnscheiben ist im Mittelelement eine eigene Führungshülse eingesetzt, welche eine axiale Durchgangsöffnung mit der Innenkontur eines Mehrkants aufweist. An der Rückfläche der Gegenzahnscheibe ist weiters ein Mehrkantschaft angeordnet, wobei dieser in die axiale Durchgangsöffnung der Führungshülse eingreift und in dieser verschiebbar ist.

Eine andere Zug-Druck-Stange ist aus der WO 2006/042750 A1 bekannt geworden. Die Druckstange umfasst einen zentralen Körper mit mindestens einem Adapter zur Montage der Zug-Druck-Stange, wobei der Adapter zur Längenveränderung der Zug-Druck-Stange über eine Gewindeanordnung drehbar mit dem Körper verbunden ist. Weiters ist eine Rasteinrichtung vorgesehen, die die Drehbewegung in der Weise beaufschlagt, dass sie in einer Mehrzahl von Drehstellungen mit einer vorbestimmbaren Verriegelungskraft lösbar arretiert. Die Rasteinrichtung weist zwei Rastelemente auf, wobei das erste Rastelement an dem Adapter und das zweite Rastelement an dem Körper angeordnet ist. Das erste Rastelement weist mindestens eine Rastnase auf, mit der es zur Arretierung der Rasteinrichtung in das zweite Rastelement eingreift. Das zweite Rastelement ist als Zahnkranz ausgebildet, in welchen das erste Rastelement mit seiner Rastnase federnd eingreift und auf dieses eine Kraft ausübt.

Der vorliegenden Erfindung liegt die Aufgabe zugrunde, eine Zug-Druck-Stange in kompakter, einfacher Modulbauweise zu schaffen, die ohne Zuhilfenahme von Werkzeug zu bedienen ist und eine unbeabsichtigte Längenänderung in deren eingebauten Zustand verhindert ist.

Diese Aufgabe der Erfindung wird durch die Merkmale des Anspruches 1 gelöst. Der sich durch die Merkmale des Anspruches 1 ergebende Vorteil liegt darin, dass durch die kompakte Baueinheit aus der Befestigungsvorrichtung, dem Anschlussstück sowie der dazwischen angeordneten Rastvorrichtung nicht nur eine in Axialrichtung erfolgende Gegeneinanderverspannung der beiden Rastelemente erzielt wird, sondern darüber hinaus auch noch durch die Abstützung des Federelements an der Stützschulter des Anschlussstücks eine gegenseitige Verspannung der beiden zusammenwirkenden Gewinde zwischen dem Schaft der Befestigungsvorrichtung und dem Anschlussstück erzielbar ist. So können dadurch in Axialrichtung wechselnde Belastungen auf die Zug-Druck-Stange bei entsprechender Wahl der Federkraft und die damit verbundenen Geräuschentwicklungen sowie unangenehmes Klopfen bzw. Schlagen vermieden werden. Weiters wird durch die lose Anordnung des Federelements sowie zumindest eines der beiden zusammenwirkenden Rastelemente am Schaft der Befestigungsvorrichtung eine ohne zusätzliche Werkzeuge zu fügende Baugruppe geschaffen, bei der lediglich das Anschlussstück zur Aufnahme des Schaftgewindes mit der Befestigungsvorrichtung nach Auffädeln zumindest eines Rastelementes sowie des Federelements zusammengebaut werden kann. Damit wird auch die Möglichkeit geschaffen, bei starker Abnützung oder einem Federbruch rasch und ohne Zuhilfenahme von zusätzlichen Werkzeugen die beschädigten bzw. abgenützten Bauteile zu erneuern.

In einer weiteren vorteilhaften Ausführungsform bilden das Anschlussstück, die erste Befestigungsvorrichtung sowie die Rastvorrichtung eine gemeinsame zusammengehörige Baugruppe aus. Dadurch kann eine vormontierte, zusammengehörige Baugruppe geschaffen werden, welche je nach weiteren Anwendungsfall beliebig mit anderen Bauelementen kombinierbar ist. Damit kann eine Bauteilgruppe geschaffen werden, an welche in einem Fall direkt eine weitere Befestigungsvorrichtung oder im anderen Fall ein zusätzliches Mittelteil bzw. Mittelstück damit verbunden werden. Dadurch wird ein modularer Aufbau geschaffen, welcher bei geringer Lagerhaltung eine hohe Flexibilität ermöglicht.

In einer vorteilhaften Ausführungsform ist ein Gewinde der Gewindeanordnung zumindest an einem vom Kupplungselement distanzierten Endabschnitt des Schaftes sowie ein weiteres Gewinde an der von der Rastvorrichtung abgewendeten Seite der Stützschulter im Anschlussstück ausgebildet und die Rastvorrichtung ist zwischen der Stützschulter und dem Kupplungselement angeordnet. Diese Ausführungsform ist vorteilhaft, da so ohne zusätzliche Bauteile die Rastelemente über das Federelement aneinander gedrückt werden können, ohne dass dabei ein zusätzlicher Montageaufwand von Nöten ist. Je nach Wahl der Länge des Federelements kann dieses gemeinsam mit dem oder den Rastelementen auf den Schaft aufgefädelt werden und in weiterer Folge lediglich der Schaft mit dem im Anschlussstück vorgesehenen Gewinde verschraubt werden.

In einer weiteren vorteilhaften Ausbildung ist das Gewinde des Schaftes als Außengewinde und das Gewinde des Anschlussstücks als Innengewinde ausgebildet. Durch diese Ausbildung ist es möglich, mit geringstem Platzaufwand eine kompakte Baueinheit zu schaffen und trotzdem eine gegenseitige Verstellung zwischen dem Anschlussstück und der Befestigungsvorrichtung zu ermöglichen.

Nach einer anderen vorteilhaften Ausführungsvariante weist das Anschlussstück auf seiner dem Kupplungselement zugewendeten Seite einen Aufnahmeraum zur Aufnahme der Rastvorrichtung auf. Dadurch wird ein Schutz der Rastvorrichtung vor Verschmutzung erzielt, wobei zusätzlich noch eine gegenseitige Arretierung zwischen einem Rastelement und dem Anschlussstück möglich wird. Weiters kann dadurch auch noch Platz für die Betätigung des Anschlussstücks oder aber auch für die Halterung von zusätzlichen Sicherungselementen oder dergleichen geschaffen werden.

Vorteilhaft ist auch eine Weiterbildung, in der das Anschlussstück mit dem dem Kupplungselement zugewendeten Stimende die Rastvorrichtung hin auf das Kupplungselement übergreift, da so ein noch besserer Schutz der Rastvorrichtung vor eindringendem Schmutz oder von Verunreinigungen werden kann. Gleichfalls kann dadurch aber auch ein Austritt von Schmiermittel oder dergleichen, welches gegebenenfalls auf der Rastvorrichtung aufgetragen ist, ebenfalls verhindert werden.

Vorteilhaft ist auch eine Ausbildung nach Anspruch 2, da so mit relativ kurzen Baulängen der Anschluss einer weiteren Befestigungsvorrichtung ermöglicht wird, wobei dann ein in Axialrichtung gesehen, gegenseitiges Überlappen der beiden Gewindeanordnungen zu einer zusätzlichen Bauteilverkürzung führt.

In einer weiteren vorteilhaften Ausführungsform ist eines der beiden Gewinde des Anschlussstücks zur Verbindung mit einer der beiden Befestigungsvorrichtungen als Rechtsgewinde und das andere Gewinde als Linksgewinde ausgebildet. Dabei erweist sich diese Ausgestaltung als besonders vorteilhaft, weil dadurch auf einfache Art und Weise in kürzester Axialerstreckung eine zueinander gegensinnige Verlagerung der beiden Befestigungsvorrichtungen relativ gegenüber dem Anschlussstück erzielbar ist.

In einer erfindungsgemäßen Ausführungsform ist die weitere Befestigungsvorrichtung unter Zwischenschaltung eines Zwischenstücks mit dem anderen Ende des Mittelteils verbunden. Auf diese Weise kann mit einem einfachen und eine gleichmäßige Abmessung aufweisenden Mittelteil das Auslangen gefunden werden, wobei dann je nach Höhe der zu übertragenden Kraft die Abmaße der Befestigungsvorrichtungen beibehalten werden können und lediglich im Bereich des Mittelteils die entsprechende Anpassung auf die zu übertragenden Kräfte durchzuführen ist. Insbesondere kann dabei die Knickbelastung besser berücksichtig werden.

In einer weiteren vorteilhaften Ausführungsform durchragt der Schaft der ersten Befestigungsvorrichtung das vom ersten Kupplungselement abgewendete Stimende des Anschlussstücks und ist an einem Schaftende zumindest ein radial vorragendes Anschlagelement angeordnet und mit dem Schaft verbunden. Gemäß dieser vorteilhaften Ausbildung wird ein vollständiges Herausdrehen zumindest einer der Befestigungsvorrichtungen aus dem Anschlussstück vermieden und damit eine vollständige Demontage frühzeitig vermieden.

In einer weiteren vorteilhaften Ausführungsform erfolgt die relative Verstellung des Anschlussstückes oder des Mittelteils bezüglich der beiden Befestigungsvorrichtungen stufenlos. Dadurch ist bei der gegenseitigen relativen Verlagerung auch in feinsten Abständen eine exakte Justierung der Gesamtlänge möglich und trotzdem eine Verdrehsicherung gegen unbeabsichtigtes Lösen erzielbar.

In einer erfindungsgemäßen Ausführungsform weist die weitere Befestigungsvorrichtung an ihrem dem Zwischenstück zugewendeten Ende ein Außengewinde auf, welches mit einem am Zwischenstück ausgebildeten Innengewinde drehbar verbunden ist. Die beiden Gewinde bilden dabei eine weitere Gewindeanordnung aus. In besonders vorteilhafter Weise ist das Außengewinde hierbei an einem Schaft der weiteren Befestigungsvorrichtung ausgebildet.

Erfindungsgemäß ist das Außengewinde der weiteren Befestigungsvorrichtung in axialer Richtung der Zug-Druck-Stange über einen längeren Bereich entlang der weiteren Befestigungsvorrichtung ausgebildet als die Gewindeanordnung entlang der ersten Befestigungsvorrichtung.

In einer weiteren vorteilhaften Ausführungsform ist die weiteren Befestigungsvorrichtung in axialer Richtung der Zug-Druck-Stange länger ausgebildet als die erste Befestigungsvorrichtung.

Durch diese verlängerte Ausbildung der Gewindeanordnung der weiteren Befestigungsvorrichtung bzw. der Befestigungsvorrichtung selbst erhöht sich der Verstellweg der Zug-Druck-Stange. Dieser verlängerte Verstellweg wiederum führt zu einer Verringerung der Variantenvielfalt. Durch den großen Verstellweg können kürzere oder längere Zug-Druck-Stangen ersetzt werden. Auch ist es dadurch möglich, größere Toleranzen auszugleichen.

In vorteilhafter Weise durchragt der Schaft der weiteren Befestigungsvorrichtung das vom zweiten Kupplungselement abgewendete Stirnende des Zwischenstücks und an einem Schaftende ist zumindest ein radial vorragendes Anschlagelement angeordnet und mit dem Schaft verbunden. Dadurch wird ein vollständiges Herausdrehen der weiteren Befestigungsvorrichtung aus dem Zwischenstück vermieden und damit eine vollständige Demontage frühzeitig vermieden.

In einer weiteren vorteilhaften Ausführungsform der Zug-Druck-Stange weist der Schaft der ersten Befestigungsvorrichtung und/oder der Schaft der weiteren Befestigungsvorrichtung eine sich entlang der Axialrichtung der Zug-Druck-Stange erstreckende innenliegende Bohrung auf.

Zum besseren Verständnis der Erfindung wird diese anhand der nachfolgenden Figuren näher erläutert.

Es zeigen jeweils in stark schematisch vereinfachter Darstellung:
- Fig. 1: eine nicht erfindungsgemäße Zug-Druck-Stange, in schaubildlicher Darstellung;
- Fig. 2: die Zug-Druck-Stange nach Fig. 1 in Art einer Explosionsdarstellung mit deren Einzelteilen in voneinander getrennter Position, in schaubildlicher Darstellung;
- Fig. 3: die Zug-Druck-Stange nach den Fig. 1 und 2, im Axialschnitt;
- Fig. 4: die Zug-Druck-Stange in Ansicht geschnitten, gemäß den Linien IV-IV in Fig.3;
- Fig. 5: eine mögliche Ausbildung einer erfindungsgemäßen Zug-Druck-Stange, in schaubildlicher Darstellung;
- Fig. 6: die Zug-Druck-Stange nach Fig. 5, im Axialschnitt;
- Fig. 7: eine weitere mögliche Ausbildung einer erfindungsgemäßen Zug-Druck-Stange im Axialschnitt;
- Fig. 8: einen vergrößerte Ausschnitt der Zug-Druck-Stange aus Fig. 7;
- Fig. 9: die weitere mögliche Ausbildung einer erfindungsgemäßen Zug-Druck-Stange in einer Explosionsdarstellung;
- Fig. 10: ein Anschlussstück der in Fig. 10 dargestellte Zug-Druck-Stange;
- Fig. 11: einen Ausschnitt aus der weiteren möglichen Ausbildung einer erfindungsgemäßen Zug-Druck-Stange im Viertelschnitt in einer ersten perspektivischen Darstellung;
- Fig. 12: einen Ausschnitt aus der weiteren möglichen Ausbildung einer erfindungsgemäßen Zug-Druck-Stange im Viertelschnitt in einer zweiten perspektivischen Darstellung;
- Fig. 13: einen perspektivischen Ausschnitt aus der weiteren möglichen Ausbildung der erfindungsgemäßen Zug-Druck-Stange mit einem sich in Arretierstellung befindenden Schnappbolzen;
- Fig. 14: einen perspektivischen Ausschnitt aus der weiteren möglichen Ausbildung der erfindungsgemäßen Zug-Druck-Stange mit einem gelösten Schnappbolzen;
- Fig. 15: eine perspektivische Detailansicht des Schnappbolzens aus Fig. 13 und Fig. 14;
- Fig. 16: eine andere mögliche Ausbildung einer erfindungsgemäßen Zug-Druck-Stange, im Axialschnitt, wobei sich die weitere Befestigungsvorrichtung in einer mittleren Position befindet;
- Fig. 17: die Zug-Druck-Stange nach Fig. 16, wobei sich die weitere Befestigungsvorrichtung in einer herausgedrehten Position befindet;
- Fig. 18: die Zug-Druck-Stange nach Fig. 16, wobei sich die weitere Befestigungsvorrichtung in einer hineingedrehten Position befindet.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

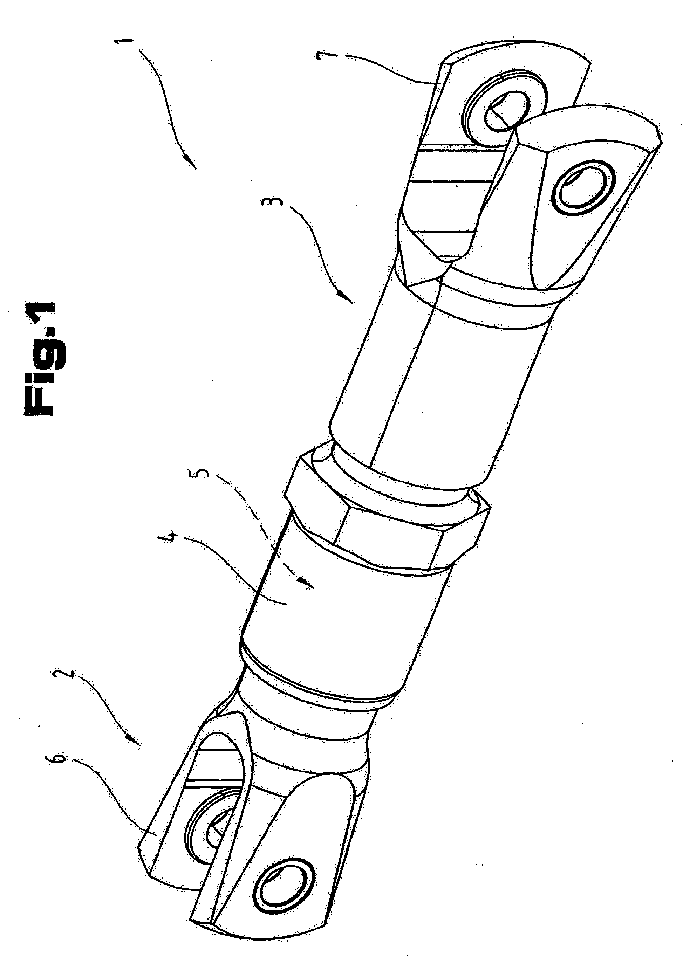

In den Fig. 1 bis 4 ist eine Zug-Druck-Stange 1 gezeigt, welche in modulartiger Bauweise ausgebildet ist und an beiden in Axialrichtung voneinander abgewendeten Enden jeweils eine Befestigungsvorrichtung 2, 3, ein zwischen diesen angeordnetes Anschlussstück 4 sowie zumindest eine Rastvorrichtung 5 umfasst.

Im hier gezeigten vorliegenden Ausführungsbeispiel weist die Zug-Druck-Stange 1 beidseits die in Axialrichtung voneinander distanzierten Befestigungsvorrichtungen 2, 3 auf, wobei hier beide jeweils ein Kupplungselement 6, 7 sowie einen daran angeordneten Schaft 8, 9 umfassen.

Die Rastvorrichtung 5 ist ihrerseits zwischen der ersten Befestigungsvorrichtung 2 und dem Anschlussstück 4 vorgesehen, um eine relative Dreh- bzw. Schwenkbewegung der Befestigungsvorrichtung 2 bezüglich dem Anschlussstück 4 nach der Justierung der Gesamtlänge der Zug-Druck-Stange 1 zu verhindern. Dazu weist die Rastvorrichtung 5 in axialer Richtung gesehen jeweils einander zugewendete sowie zusammenwirkende Rastelemente 10, 11 auf, welche mittels eines Federelementes 12 aneinander bzw. gegeneinander gedrückt sind. Beidseits des Federelements 12 können noch Distanz- bzw. Druckscheiben 13 angeordnet sein, um einen direkten Kontakt zwischen dem Federelement 12 und dem Rastelement 11 bzw. dem Anschlussstück 4 zu vermeiden. Diese Druckscheibe 13 kann aus einem Edelstahlmaterial hergestellt sein, um die Reibung zwischen dem Federelement 12 und dem Rastelement 11 bzw. dem Anschlussstück 4 zu minimieren, um einen direkten Kontakt mit Federelement 12 zu vermeiden.

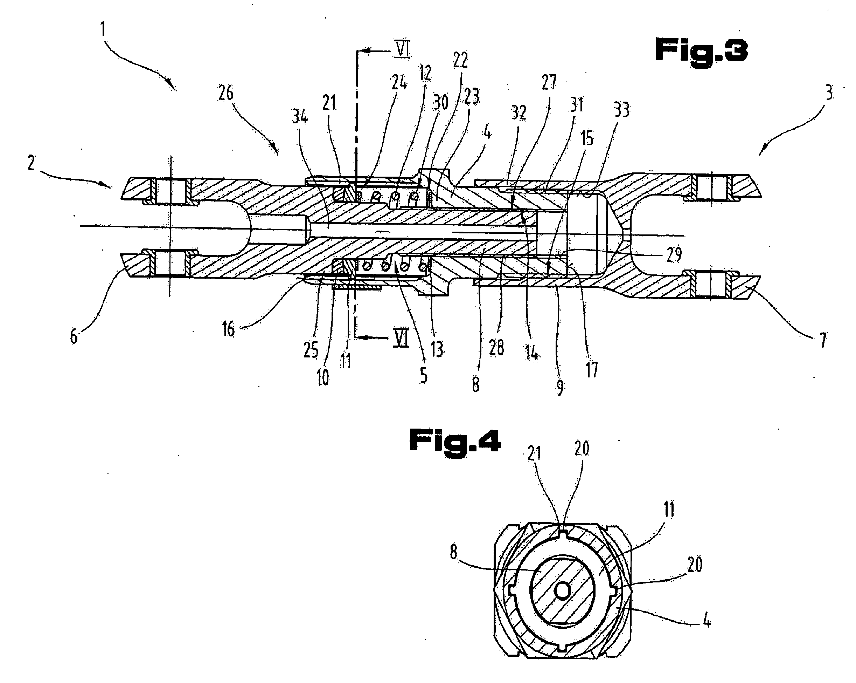

Weiters ist am besten aus der Fig. 3 zu ersehen, dass zwischen der Befestigungsvorrichtung 2, insbesondere deren Schaft 8, und dem Anschlussstück 4 eine Gewindeanordnung 14 vorgesehen ist. Eine weitere Gewindeanordnung 15 kann auch noch zwischen dem Schaft 9 der weiteren Befestigungsvorrichtung 3 und dem Anschlussstück 4 vorgesehen sein. Um eine gegenläufige Verstellung der beiden Befestigungsvorrichtungen 2, 3 relativ gegenüber dem Anschlussstück 4 zu erreichen, wird eine der beiden Gewindeanordnungen 14, 15 des Anschlussstücks 4 zur Verbindung mit einer der beiden Befestigungsvorrichtungen 2, 3 als Rechtsgewinde und die andere Gewindeanordnung als Linksgewinde ausgebildet. Durch die zueinander gegenläufig ausgebildeten Gewindeanordnungen 14, 15 bei einer gekuppelten Stellung der beiden Befestigungsvorrichtungen 2, 3 relativ gegenüber hier nicht näher dargestellten Bauteilen kann dann über Verdrehen des Anschlussstücks 4 relativ gegenüber den beiden Befestigungsvorrichtungen 2, 3 die Länge der gesamten Zug-Druck-Stange 1 einfach verändert werden. Sind beide vorgesehen und die Gewindeanordnungen 14, 15 mit einer gegenläufigen Steigung ausgebildet, kann so eine stufenlose Verstellung des Abstandes zwischen den Enden der Befestigungsvorrichtungen 2,3 erfolgen. Da die Befestigungsvorrichtungen 2, 3 an den abzustützenden Bauteilen angelenkt bzw. damit gekuppelt sind, sind diese drehfest bezüglich des Anschlussstücks 4 gehalten. Durch die Verdrehung des Anschlussstücks 4 bzw. des später noch beschriebenen Mittelteils 35 relativ gegenüber den Befestigungsvorrichtungen 2, 3, erfolgt eine gewisse Ver- oder Vorspannung zwischen diesen Teilen über die Gewindeanordnungen 14, 15. Zur Erleichterung der Einleitung der Drehbewegung auf das Anschlussstück 4 kann an dessen Außenseite ein Hilfselement, z.B. ein Sechskant oder dgl., angeordnet sein.

Das Anschlussstück 4 weist seinerseits in Axialrichtung gesehen voneinander distanzierte Stirnenden 16, 17 auf, welche den beiden Befestigungsvorrichtungen 2, 3 zugewendet sind und jeweils zur Verbindung mit diesen dienen.

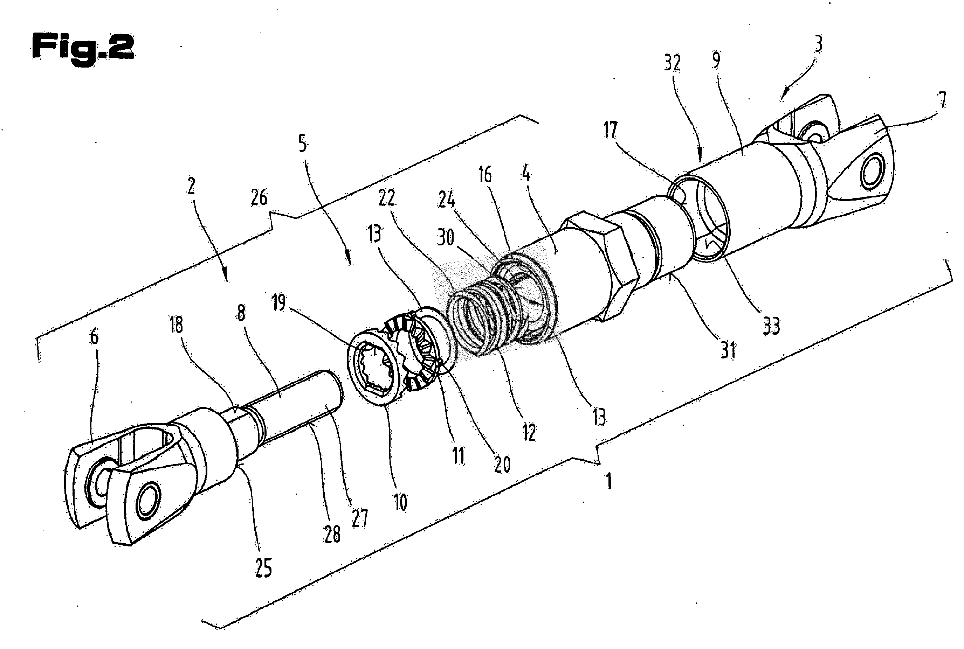

Das erste Rastelement 10 der Rastvorrichtung 5 ist seinerseits drehfest an der Befestigungsvorrichtung 2 angeordnet, wie dies am besten aus einer Zusammenschau der Fig. 2 und 3 zu ersehen ist. So ist es möglich, dass das erste Rastelement 10 entweder integraler Bestandteil der Befestigungsvorrichtung 2 ist oder durch einen eigenen Bauteil gebildet ist. So wäre es möglich, das Rastelement 10 beispielsweise in Art einer Zahnscheibe auszubilden, welche drehfest mit dem Schaft 8 der Befestigungsvorrichtung 2 gekuppelt ist. Durch die Ausbildung als Zahnscheibe weist das erste Rastelement 10 eine zentrale Öffnung auf, welche zur Aufnahme des Schaftes 8 dient. Bei entsprechender, gegenseitiger Passungswahl kann dies von einem leichten Spiel bis hin zu einem Presssitz führen. Die drehfeste Verbindung zwischen dem ersten Rastelement 10 und dem Schaft 8 kann beispielsweise dadurch erfolgen, dass am Schaft 8 eine Abflachung 18 angeordnet ist, welche mit einer entsprechenden Gegenfläche 19 am ersten Rastelement 10 zusammenwirkt und so die drehfeste Kupplung bzw. Verbindung erfolgt.

Das zweite Rastelement 11 ist hier ebenfalls in Form einer Zahnscheibe ausgebildet, ist jedoch um den Schaft 8 der ersten Befestigungsvorrichtung 2 frei drehbar. Um eine gegenseitige Verrastung der beiden Rastelemente 10 sowie 11 zu erzielen, ist das zweite Rastelement 11 seinerseits drehfest mit dem Anschlussstück 4 verbunden. Dazu weist das als Zahnscheibe ausgebildete Rastelement 11 an seinem äußeren Ende zumindest einen radial vorragenden Fortsatz 20 auf. Dieser Fortsatz 20 greift in eine nutförmig ausgebildete und sich in Axialrichtung erstreckende Ausnehmung 21 im Anschlussstück 4 ein. Bevorzugt sind über den Umfang gesehen mehrere Fortsätze 20 sowie dazu gegengleich ausgebildete Ausnehmungen 21 vorgesehen, um eine bessere und stabilere Kraftübertragung zu erzielen. Dabei können die Fortsätze 20 sowie die damit zusammenwirkenden Ausnehmungen 21 sowohl am Rastelement 11 als auch am Anschlussstück 4 angeordnet bzw. ausgebildet sein. Der Verdrehwinkel zwischen den beiden Rastelementen 10, 11 hängt von der Größe derselben ab. Sind Zahnscheiben gewählt, kann mit geringen Zahngrößen eine nahezu stufenlose Verstellung bei gleichzeitiger einrastender Stellung zwischen den beiden Rastelementen 10, 11 erzielt werden.

Unabhängig davon wäre es aber noch möglich, anstelle von Zähnen die Rastelemente 10, 11 mit einem Reibbelag oder dgl. zu versehen, wodurch eine noch feinere Einstellung der Gesamtlänge der Zug-Druck-Stange 1 erfolgen kann. Mit einer Art Mikrostruktur an beiden einander zugewendeten Oberflächen der Rastelemente 10, 11 kann dies ebenfalls erreicht werden.

Das Federelement 20 der Rastvorrichtung 5 ist mit seinem ersten Ende 22 an einer am Anschlussstück 4 ausgebildeten Stützschulter 23 und mit seinem zweiten Ende 24 am zweiten Rastelement 11 abgestützt. Somit sind beide zusammenwirkenden Rastelemente 10, 11 um den Schaft 8 der ersten Befestigungsvorrichtung 2 herum angeordnet. Das erste Rastelement 10 stützt sich seinerseits - da dies hier durch einen eigenen Bauteil gebildet ist - an einer Schulter 25 der Befestigungsvorrichtung 2 ab. Durch die Abstützung des Federelements 20 an der Stützschulter 23 und die dabei ausgewirkte Kraftrichtung auf die Rastelemente 10, 11 und in weiterer Folge auf die Befestigungsvorrichtung 2, erfolgt eine gegenseitige Verspannung der beiden Gewinde zwischen dem Schaft 8 und dem Anschlussstück 4. Dadurch kann eine Geräuschentwicklung bei Wechsellasten verringert bzw. überhaupt vermieden werden.

Die bevorzugt als Zahnscheiben ausgebildeten Rastelemente 10, 11 sind jeweils für sich unabhängig, drehfest an voneinander unterschiedlichen Bauteilen der Zug-Druck-Stange 1 angeordnet und zusätzlich durch das Federelement 12 gegeneinander verspannt. Zumindest eines der Rastelemente - im vorliegenden Ausführungsbeispiel das Ratelement 11 - ist in Axialrichtung bezüglich der Befestigungsvorrichtung 2 relativ dazu verstellbar, wodurch die Rastelemente 10, 11 die Drehbewegung der Befestigungsvorrichtung 2, 3 relativ bezüglich dem Anschlussstück 4 in einer Mehrzahl von Drehstellungen mit einer vorbestimmten Verriegelungskraft lösbar arretieren.

Das Anschlussstück 4, die erste Befestigungsvorrichtung 2 sowie die Rastvorrichtung 5 bilden eine gemeinsame und zusammengehörige Baugruppe 26 aus. Diese zusammengehörige Baugruppe 26 ist bei diesem Ausführungsbeispiel mit der weiteren Befestigungsvorrichtung 3 kombinierbar, wobei diese gemeinsam die komplette Zug-Druck-Stange 1 ausbilden.

Die zuvor beschriebene Gewindeanordnung 14 zwischen dem Anschlussstück 4 und der ersten Befestigungsvorrichtung 2 ist hier derart ausgebildet, dass ein Gewinde der Gewindeanordnung 14 zumindest an einem vom Kupplungselement 6 distanzierten Endabschnitt 27 des Schaftes 8 sowie ein weiteres Gewinde an der von der Rastvorrichtung 5 abgewendeten Seite der Stützschulter 23 im Anschlussstück 4 ausgebildet ist. Die Rastvorrichtung 5 ist ihrerseits zwischen der Stützschulter 23 und dem Kupplungselement 6 der ersten Befestigungsvorrichtung 4 angeordnet. Dabei ist das am Schaft 8 ausgebildete Gewinde als Außengewinde 28 ausgebildet. Das damit zusammenwirkende Gewinde des Anschlussstücks 4 ist dann als Innengewinde 29 ausgeführt.

Das Anschlussstück 4 weist weiters auf der dem Kupplungselement 6 zugewendeten Seite einen Aufnahmeraum 30 zur Aufnahme der Rastvorrichtung 5 auf. Damit durchragt der Schaft 8 die Rastvorrichtung 5 auf die vom ersten Kupplungselement 6 abgewendete Seite bzw. Richtung und erstreckt sich hin auf das der weiteren Befestigungsvorrichtung 3 zugewendete Stimende 17. Um einen Schutz der Rastvorrichtung 5 innerhalb des Anschlussstück 4 zu gewährleisten, kann das dem Kupplungselement 6 der ersten Befestigungsvorrichtung 2 zugewendete Stirnende 16 die Rastvorrichtung 5 hin auf das Kupplungselement 6 übergreifen. Bei entsprechender, maßlicher Abstimmung zwischen dem Ende des Kupplungselements 6 und dem Aufnahmeraum 30 kann dort bei Wahl eines geringen Abstandes zwar eine gegenseitige Verdrehung der Befestigungsvorrichtung 2 relativ gegenüber dem Anschlussstück 4 erfolgen, jedoch ein Eindringen von Schmutz oder dergleichen erschwert bzw. überhaupt verhindert werden. So wäre es möglich im Bereich des Stirnendes 16 des Anschlussstücks 4 ein Dichtelement vorzusehen.

Zur Verbindung des Anschlussstücks 4 im Bereich seines Stirnendes 17 mit der weiteren Befestigungsvorrichtung 3, weist dieses auf der vom ersten Kupplungselement 6 der ersten Befestigungsvorrichtung 2 abgewendeten Seite ein Außengewinde 31 auf.

Ist zusätzlich zur Baugruppe 26 die weitere Befestigungsvorrichtung 3 vorgesehen, weist diese an ihrem dem Anschlussstück 4 zugewendeten Ende 32 ein Innengewinde 33 auf. Damit bilden das Außengewinde 31 mit dem damit zusammenwirkenden Innengewinde 33 die weitere Gewindeanordnung 15 aus. In vorliegenden Fall können sich die beiden Gewindeanordnungen 14 sowie 15 in Axialrichtung gesehen übergreifen, wobei das Anschlussstück 4 den gemeinsamen verbindenden Bauteil darstellt. Durch die gezielte Wahl der beiden Gewindeanordnungen 14, 15 und der dabei unterschiedlichen Ausbildung derselben zwischen den beiden Schäften 8, 9 - einmal als Außengewinde 28 am Schaft 8 und einmal als Innengewinde 33 im Schaft 9 - kann so eine sehr kurze Ausbildung der gesamten Zug-Druck-Stange 1 in deren Axialrichtung erfolgen.

Weiters ist noch aus der Fig. 3 zu ersehen, dass die Befestigungsvorrichtung 2, welche Bestandteil der gemeinsamen Baugruppe 26 ist, in Axialrichtung von einer Durchgangsöffnung 34 durchsetzt ist. Diese dient dazu, falls sich innerhalb der Zug-Druck-Stange 1 Kondenswasser bilden sollte, dass diese ungehindert ablaufen kann. Weiters kann die Durchgangsöffnung 34 auch noch zum Druckausgleich zwischen dem Innenraum und der äußeren Umgebung sowie zu Reduzierung des Gewichtes bzw. der Masse der Befestigungsvorrichtungen 2, 3 dienen.

Ferner ist ein Gewinde der Gewindeanordnung 14 zumindest an einem vom Kupplungselement 6 distanzierten Endabschnitt 27 des Schaftes 8 sowie ein weiteres Gewinde an der von der Rastvorrichtung 5 abgewendeten Seite der Stützschulter 23 im Anschlussstück 4 ausgebildet und die Rastvorrichtung 5 ist zwischen der Stützschulter 23 und dem Kupplungselement 6 angeordnet.

Außerdem ist das Gewinde des Schaftes 8 als Außengewinde 28 und das Gewinde des Anschlussstücks 4 als Innengewinde 29 ausgebildet.

Daneben weist das Anschlussstück 4 auf seiner dem Kupplungselement 6 zugewendeten Seite einen Aufnahmeraum 30 zur Aufnahme der Rastvorrichtung 5 auf.

Darüber hinaus übergreift das Anschlussstück 4 mit dem dem Kupplungselement 6 zugewendeten Stirnende 16 die Rastvorrichtung 5 hin auf das Kupplungselement 6.

Eines der beiden Gewinde 29, 31 des Anschlussstücks 4 ist zur Verbindung mit einer der beiden Befestigungsvorrichtungen 2, 3 als Rechtsgewinde und das andere Gewinde 31, 29 als Linksgewinde ausgebildet.

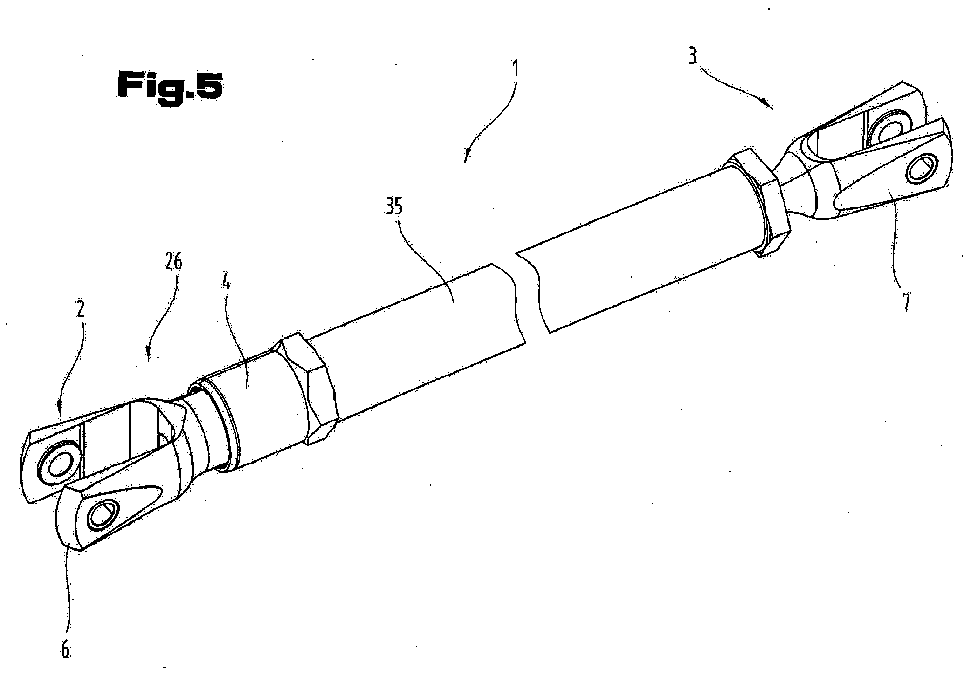

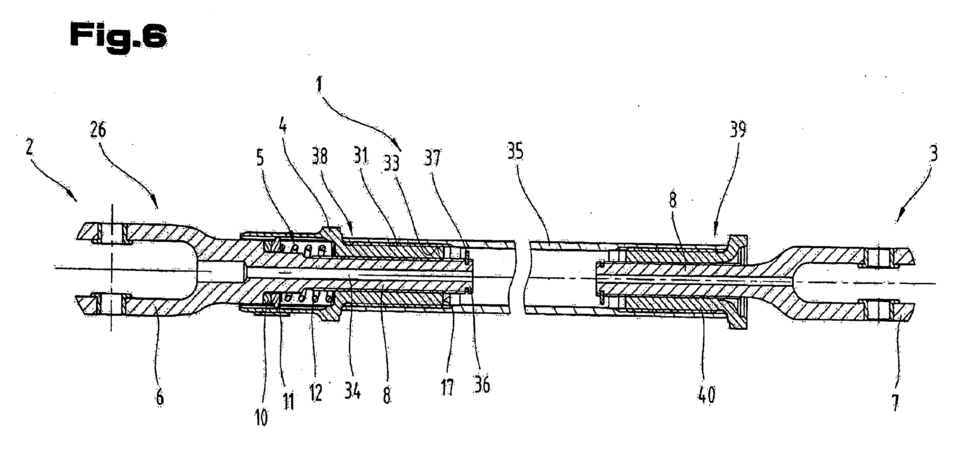

In den Fig. 5 und 6 ist eine gegebenenfalls für sich eigenständige Ausführungsform der Zug-Druck-Stange 1 gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

Diese hier dargestellte Zug-Druck-Stange 1 weist unter anderem als modularen Bauteil auch wieder die gemeinsame Baugruppe 26 an einem Ende 38 auf. Im Gegensatz zu der Ausführungsform gemäß den Fig. 1 bis 4 ist an dem Außengewinde 31 des Anschlussstücks 4 nicht direkt die weitere Befestigungsvorrichtung 3 damit verbunden, sondern zur Erzielung einer größeren, axialen Längserstreckung ein eigener Mittelteil 35 vorgesehen. Dieser kann rohrförmig ausgebildet sein, wobei an dem von der Baugruppe 26 abgewendeten, weiteren Ende 39 des Mittelteils 35 der Zug-Druck-Stange 1 die weitere Befestigungsvorrichtung 3 vorgesehen bzw. damit verbunden ist.

Der Aufbau und die Bauteile der gemeinsamen Baugruppe 26 entsprechen exakt jenem, wie dies bereits zuvor detailliert beschrieben worden ist. Deshalb wird hier, um unnötige Wiederholungen zu vermeiden, auf die detaillierte Beschreibung in den vorangegangenen Fig. 1 bis 4 hingewiesen und Bezug genommen.

Wie nun am besten aus der Fig. 6 zu ersehen ist, durchragt der Schaft 8 der ersten Befestigungsvorrichtung 2 das vom Kupplungselement 6 abgewendete Stirnende 17 des Anschlussstücks 4. Um ein unbeabsichtigtes, vollständiges Herausdrehen der Befestigungsvorrichtung 2 aus dem Anschlussstück 4 zu vermeiden, ist an einem Schaftende 36 zumindest ein radial vorragendes Anschlagelement 37 angeordnet und mit diesem verbunden. Dieses Anschlagelement 37 kann dabei beispielsweise als radial federnde Sicherungsscheibe für Wellen ausgebildet sein, welches in eine im Schaft 8 angeordnete Wellennut eingreift.

Der hier rohrförmig ausgebildete Mittelteil 35 weist in Axialrichtung gesehen, die voneinander distanzierte Enden 38, 39 auf. So ist hier im Bereich des ersten Endes 38 die zuvor beschriebene, gemeinsame Baugruppe 26 damit verbunden. Dies erfolgt bevorzugt über eine Gewindeverbindung, welche zusätzlich noch beispielsweise mit einem Haftmittel gegen ein unbeabsichtigtes Lösen gesichert ist. Es wäre aber auch eine andere Befestigungsmöglichkeit aus dem bekannten Stand der Technik möglich. Dies könnte z.B. auch durch eine form- und/oder stoffschlüssige Verbindung erfolgen.

Im Bereich des weiteren Endes 39 des Mittelteils 35 kann ebenfalls ein Innengewinde vorgesehen sein, wobei die weitere Befestigungsvorrichtung 3 entweder direkt mit diesem im Mittelteil 35 vorgesehenen Innengewinde in Eingriff stehen kann, oder aber auch unter Zwischenschaltung eines Zwischenstücks 40 damit verbunden ist. Das Zwischenstück 40 kann an seiner Außenseite ein Außengewinde aufweisen, welches mit dem im Bereich des Endes 39 angeordneten Innengewinde in Eingriff steht. So kann auch von einer Gewindehülse gesprochen werden, wenn das Zwischenstück 40 mit einem Innen- als auch einem Außengewinde versehen ist. Es wäre aber auch möglich, das Zwischenstück 40 auf jede andere beliebige Art und Weise mit dem Ende 39 des Mittelteils 35 zu verbinden bzw. daran zu haltern. Hier wären beispielsweise auch eine formschlüssige Halterung und/oder aber auch eine stoffschlüssige Verbindung, beispielsweise über eine Klebenaht oder dergleichen, denkbar. Dies ist aus dem Stand der Technik hinlänglich bekannt und es wird deshalb nicht mehr näher darauf eingegangen.

Die beiden Befestigungsvorrichtungen 2, 3 mit ihren Kupplungsvorrichtungen 6, 7 sind hier als gabelförmig ausgebildete Halterungen dargestellt, wobei es aber möglich ist, diese an die jeweiligen Anschlussbedingungen beliebig anzupassen.

Zur Erzielung einer gegensinnigen Verlängerung bzw. Verkürzung der gesamten Zug-Druck-Stange 1 sind auch bei dieser Ausbildung die Gewindeanordnungen der beiden Befestigungsvorrichtungen 2, 3 einmal durch ein Linksgewinde und einmal durch ein Rechtsgewinde auszubilden.

Ferner durchragt der Schaft 8 der ersten Befestigungsvorrichtung 2 das vom ersten Kupplungselement 6 abgewendete Stirnende 17 des Anschlussstücks 4 und an einem Schaftende 36 ist zumindest ein radial vorragendes Anschlagelement 37 angeordnet und mit dem Schaft 8 verbunden.

Außerdem kann die relative Verstellung des Anschlussstückes 4 oder des Mittelteils 35 bezüglich der beiden Befestigungsvorrichtungen 2, 3 stufenlos erfolgen.

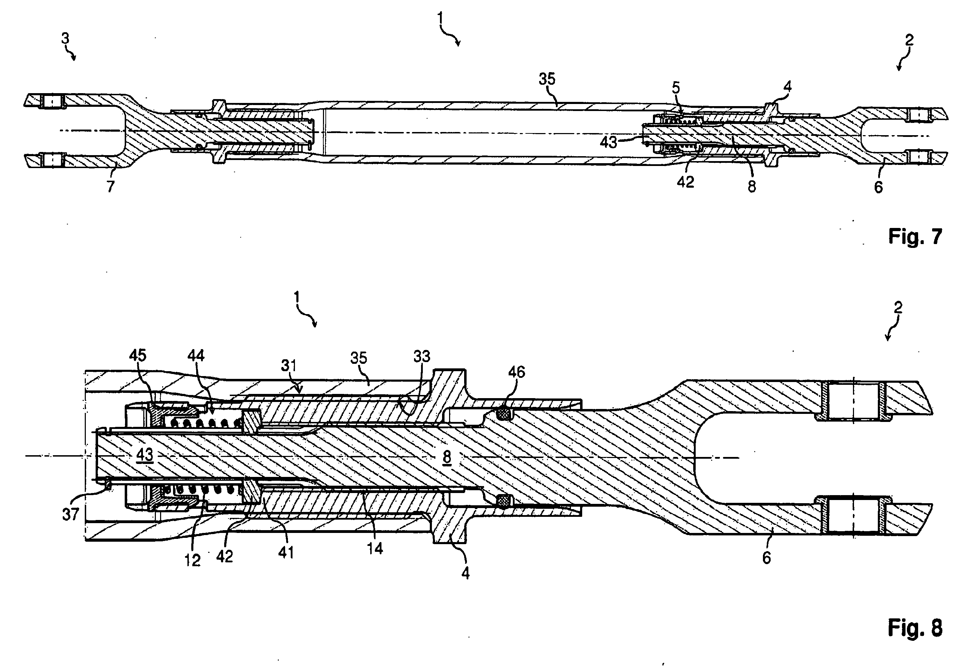

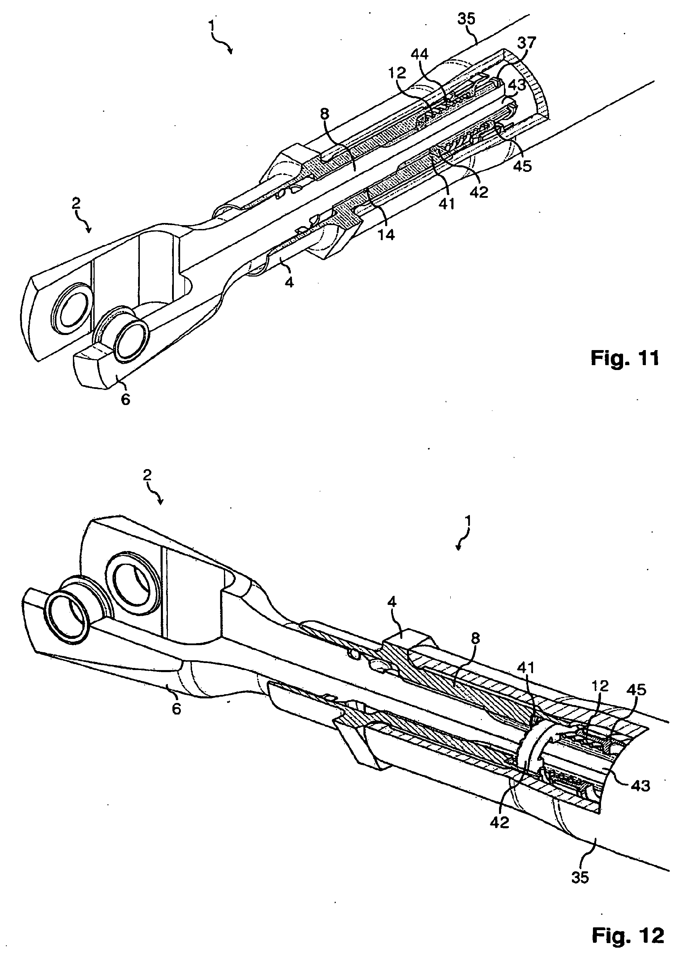

In den Fig. 7 bis 12 ist eine weitere und gegebenenfalls für sich eigenständige Ausführungsform der Zug-Druck-Stange 1 gezeigt, wobei wiederum für gleiche Teile gleiche Bezugszeichen bzw. Bauteilbezeichnungen wie in den vorangegangenen Fig. 1 bis 6 verwendet werden. Um unnötige Wiederholungen zu vermeiden, wird auf die detaillierte Beschreibung in den vorangegangenen Fig. 1 bis 6 hingewiesen bzw. Bezug genommen.

Die in Fig. 7 bis 12 dargestellte Zug-Druck-Stange 1 weist ein Mittelteil 35, Befestigungsvorrichtungen 2, 3 mit jeweils einem Kupplungselement 6 bzw. 7 und einem daran angeordneten Schaft 8 bzw. 9 auf. Die Rastvorrichtung 5 besitzt in axialer Richtung gesehen jeweils einander zugewendeten sowie zusammenwirkenden ersten und zweiten Rastelementen 41, 42. Die Rastelemente 41, 42 werden mittels eines Federelements aneinander gedrückt. Im Gegensatz zu den vorhergehen beschriebenen Ausführungsformen ist hierbei das erste Rastelement 41 drehfest mit dem Anschlussstück 4 verbunden und das zweite Rastelement 42 ist drehfest an der Befestigungsvorrichtung 2 angeordnet. Ansonsten entsprechen das erste Rastelement 41 im Wesentlichen dem weiter oben beschriebenen Rastelement 10 und das zweite Rastelement 42 im Wesentlichen dem oben beschriebenen Rastelement 11 und können insbesondere als Zahnscheiben ausgebildet sein.

Der Schaft 8 ist über eine Gewindeanordnung 14 mit dem Anschlussstück 4 verbunden. Ferner ist das Anschlussstück 4 über eine weitere aus dem Innengewinde 33 und dem korrespondierenden Außengewinde 31 bestehende Gewindeanordnung mit dem Mittelteil 35 verbunden. Daneben weist das Anschlussstück 4 auf seiner dem Kupplungselement 6 abgewandten Seite einen Aufnahmeraum 44 auf. Dieser Aufnahmeraum 44 dient zur Aufnahme der Rasteinrichtung 5. An dessen dem Kupplungselement 6 abgewandten Seite wird der Aufnahmeraum 44 durch eine als Stützring 45 ausgebildete Stützschulter 23 zur Abstützung des ersten Endes des Federelements 12 begrenzt. In der in den Fig. 7 bis 12 beschriebenen Ausführungsform ist das Federelement 12 damit mit seinem ersten Ende 22 an dem Stützring 45 und mit seinem zweiten Ende 24 am zweiten Rastelement 42 abgestützt. Die Rastelemente 41, 42 arretieren auf diese Weise lösbar die Drehbewegung der Befestigungsvorrichtung 2 relativ bezüglich dem Anschlussstück 4 in einer Mehrzahl von Drehstellungen mit einer vorbestimmten Verriegelungskraft.

Der Schaft 8 weist auf seiner dem Kupplungselement 6 abgewandten Seite einen profilierten Schaftfortsatz 43 auf. Im vorliegenden Ausführungsbeispiel ist die Profilierung als Nute im Schaftfortsatz ausgebildet. Ferner ist das zweite Rastelement 42 ringförmig ausgebildet und weist ein Durchgangsloch auf, dessen Geometrie auf die Profilierung des Schaftfortsatzes 43 abgestimmt ist, sodass das zweite Rastelement 42 zum einen drehfest zum anderen axial verschiebbar am Anschlussstück 6 gelagert ist.

Der Stützring 45 ist durch eine Schnappverbindung mit dem dem Kupplungselement 6 abgewandten axialen Endbereich des Anschlussstückes 4 verbunden. Dabei durchragt der Schaftfortsatz 43 den Stützring 45, wobei die kreisförmige Innenöffnung des Stützrings 45 einen Durchmesser besitzt, der eine freie Beweglichkeit des Stützrings in axialer Richtung entlang Schaftfortsatzes 43 erlaubt.

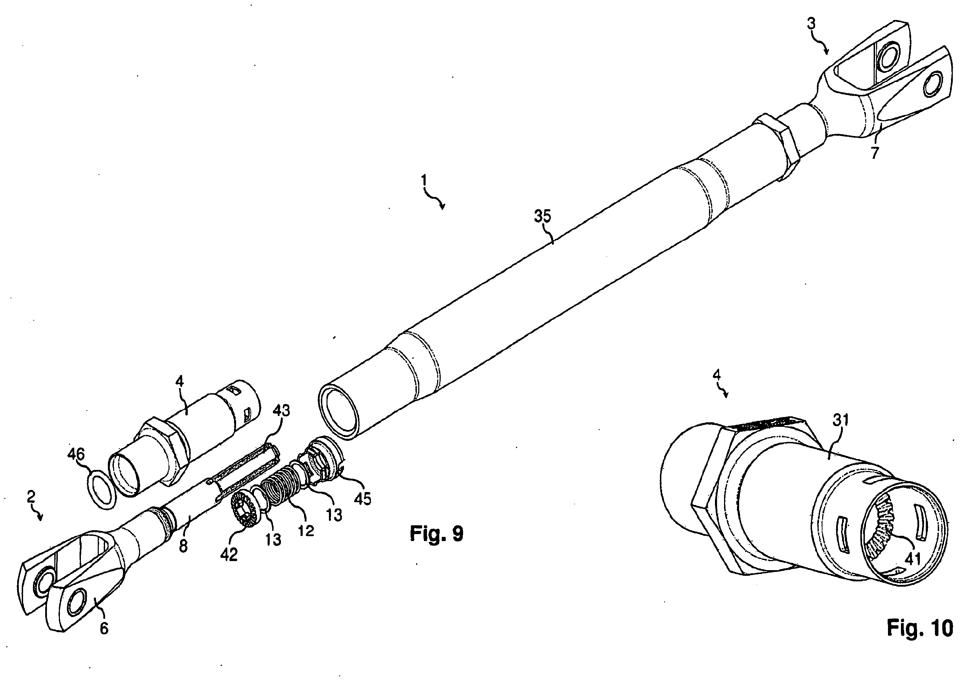

Das erste Rastelement 41 ist einstückig mit dem Anschlussstück 4 und bildet einen innenliegenden Wellenabsatz des Anschlussstückes 4. Wie insbesondere in Fig. 10 dargestellt, ist dieser innenliegende Wellenabsatz des Anschlussstücks 4 mit Zähnen versehen, sodass ein Zusammenwirken der beiden Rastelement 41, 42 die Drehbewegung der Befestigungsvorrichtung 2 relativ bezüglich dem Anschlussstück 4 in einer Mehrzahl von Drehstellungen mit einer vorbestimmten Verriegelungskraft lösbar arretiert wird.

Der profilierte Schaftfortsatz 43 durchragt den Aufnahmeraum 44 des Anschlussstücks 4 und am Schaftende 36 des Schafts 8 ist ein radial vorragendes Anschlagelement 37 angeordnet. Ferner ist zwischen dem Kupplungselement 6 und dem Anschlusselement 4 eine Dichtung 46 in Form eines Dichtringes angeordnet.

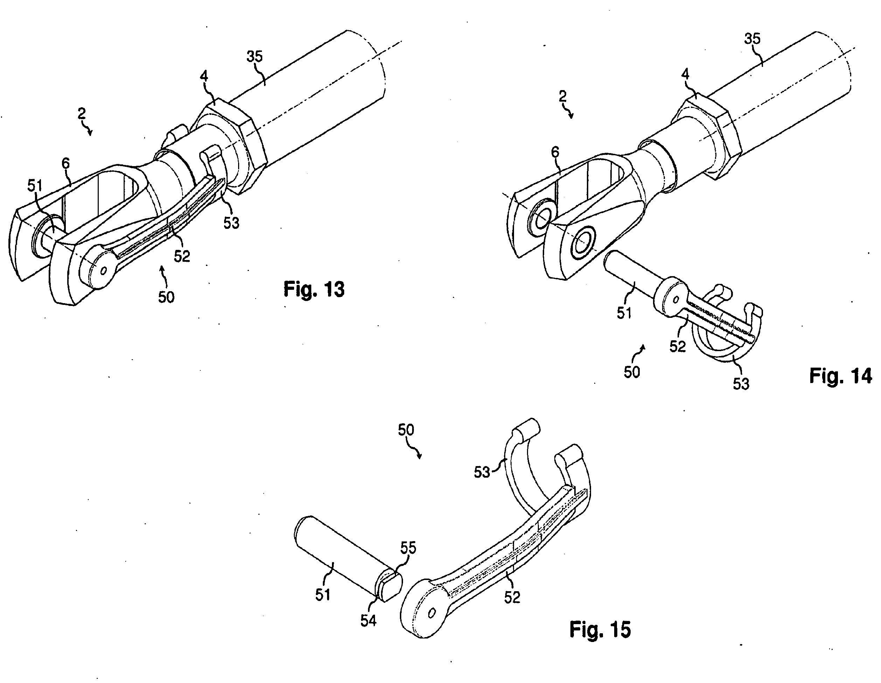

Fig. 13 zeigt einen perspektivischen Ausschnitt aus der weiteren möglichen Ausbildung der erfindungsgemäßen Zug-Druck-Stange mit einem sich in Arretierstellung befindenden Schnappbolzen 50. Der Schnappbolzen 50 besteht aus einem Stift 51, einem Hebelarm 52 und einem Schnappring 53. Der Stift ist in die Ösen des Kupplungselementes 6 eingefügt. Der Schnappring 53 ist um den äußeren Umfang des Anschlussstückes 4 gelegt. Durch das Einschnappen des Schnapprings 53 ist der Bolzen 51 gesichert, sodass ein Lösen des Bolzens 51 aus den Ösen des Kupplungselements 6 zuverlässig verhindert wird. Der Stift 51 besteht aus Metall, insbesondere aus einem Edelstahlwerkstoff. Der Hebelarm 52 und der Schnappring 53 sind aus einem Kunststoff, insbesondere aus Polyamid, gefertigt. In vorteilhafter Weise werden hierbei der Hebelarm 52 und der Schnappring 53 einstückig hergestellt.

Fig. 14 zeigt den Schnappbolzen 50 in einer gelösten Stellung, d.h. der Bolzen 51 ist nicht in Ösen des Kupplungselementes 6 eingefügt und der Schnappring 53 ist nicht um das Anschlussstück 4 gelegt.

Fig. 15 zeigt eine perspektivische Detailansicht des Schnappbolzens 50. Der Hebelarm 52 und der Schnappring 53 sind einstückig ausgebildet. Der Bolzen 51 kann zur Verbindung mit dem Hebelarm 52 mit einem seiner axialen Enden in eine Vertiefung des Hebelarmes 52 eingesteckt werden. Die Vertiefung des Hebelarmes 52 ist in den Figuren nicht dargestellt. Die Verbindung zwischen Bolzen 51 und Hebelarm 52 erfolgt insbesondere durch eine am Bolzen 51 angebrachte Hinterschneidung 54, welche mit Einstecken des Bolzens in die korrespondierende Vertiefung des Hebelarmes 52 eine formschlüssige Verbindung zwischen Bolzen 51 und Hebelarm 52 entstehen lässt. Sowohl die Hinterschneidung 54 als auch die Abflachung 55 sind in einem axialen Endbereich des Bolzens 51 ausgebildet. Ferner ist am Bolzen 51 eine Abflachung 55 angebracht. Diese Abflachung 55 korrespondiert nach dem Einstecken des Bolzens 51 in die Vertiefung des Hebelarmes 52 mit einer entsprechend ausgebildeten Gegenform, sodass ein Verdrehen des Bolzens 51 relativ zum Hebelarm 52 zuverlässig verhindert und somit eine verdrehfeste Verbindung gebildet wird.

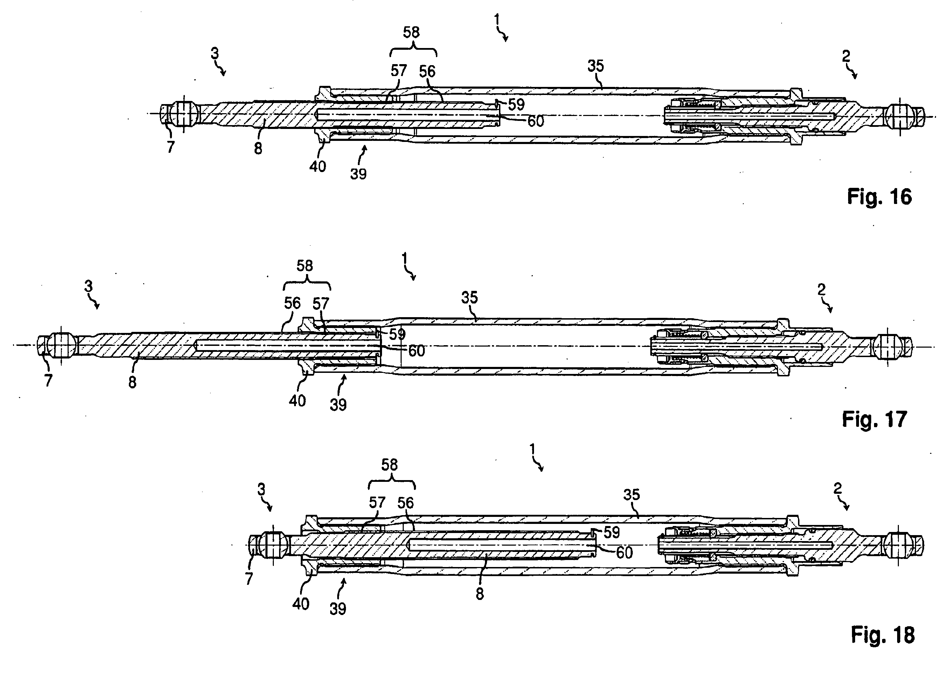

Die Fig. 16 bis 18 zeigen noch eine Ausführungsform der Zug-Druck-Stange 1 mit einer ersten Befestigungsvorrichtung 2, einem Mittelteil 35 und einer weiteren Befestigungsvorrichtung 3. Die Befestigungsvorrichtung 2 entspricht hierbei derjenigen, die bezüglich der Figuren 6 bis 12 bereits ausführlich beschrieben wurde. Zur Vermeidung von Wiederholungen sei daher auf die diesbezügliche Stellen dieser Beschreibung verwiesen.

Die weitere Befestigungsvorrichtung 3 weist ein zweites Kupplungselement 7 und einen Schaft 8 auf. Sowohl der Schaft 8 der weiteren Befestigungsvorrichtung 8 als auch der in den Figuren 16 bis 18 nicht näher bezeichnete Schaft der ersten Befestigungsvorrichtung weisen eine sich entlang der Axialrichtung der Zug-Druck-Stange 1 erstreckende innenliegende Bohrung 60 auf.

Die weitere Befestigungsvorrichtung 3 ist unter Zwischenschaltung eines Zwischenstücks 40 mit einem Ende 39 des Mittelteils 35 verbunden. Am dem Zwischenstück 40 zugewendeten Ende der Befestigungsvorrichtung 3 ist ein Außengewinde 56 angebracht. Dieses ist mit einem am Zwischenstück 40 ausgebildeten Innengewinde 57 drehbar verbunden, sodass die beiden Gewinde 56, 57 eine weitere Gewindeanordnung 58 ausbilden. Hierbei ist das Außengewinde 56 an der Mantelfläche des Schaftes 8 der weiteren Befestigungsvorrichtung 3 ausgebildet.

Das Außengewinde 56 der weiteren Befestigungsvorrichtung 3 ist in axialer Richtung der Zug-Druck-Stange 1 über einen längeren Bereich entlang der weiteren Befestigungsvorrichtung 3 ausgebildet als die Gewindeanordnung 14 entlang der ersten Befestigungsvorrichtung 2. Auch ist die weitere Befestigungsvorrichtung 3 in axialer Richtung der Zug-Druck-Stange 1 länger ausgebildet als die erste Befestigungsvorrichtung 2.

Des Weiteren durchragt der Schaft 8 der weiteren Befestigungsvorrichtung 3 das vom zweiten Kupplungselement 7 abgewendete Stimende des Zwischenstücks 40. An dem Schaftende, welches das Zwischenstück 40 durchragt ist ein radial vorragendes Anschlagelement 59 angeordnet, welches mit dem Schaft 8 verbunden ist.

In Fig. 16 ist die weitere Befestigungsvorrichtung 3 in einer mittleren Position gezeigt. In dieser mittleren Position ist sowohl ein Eindrehen des zweiten Kupplungselementes 7 durch Verdrehen der Gewindeanordnung 58 in eine erste Drehrichtung als auch ein Herausdrehen des Kupplungselementes 7 durch Verdrehen der Gewindeanordnung 58 in eine zweite, der ersten Drehrichtung entgegengesetzten Drehrichtung möglich. Fig. 17 zeigt die Zug-Druck-Stange 1 in einer herausgedrehten Position. Die weitere Befestigungsvorrichtung 3 ist dabei durch die Gewindeanordnung 58 soweit aus dem Mittelteil 35 herausgedreht worden, bis das Anschlagelement 59 die Stirnseite des Zwischenstücks 40 kontaktiert. Fig. 18 zeigt die Zug-Druck-Stange 1 in einer hineingedrehten Position. Die weitere Befestigungsvorrichtung 3 ist dabei soweit in das Mittelteil 35 hineingedreht worden wie es die Gewindeanordnung 58 zulässt.

Die Ausführungsbeispiele zeigen mögliche Ausführungsvarianten der Zug-Druck-Stange 1 bzw. der gemeinsamen Baugruppe 26, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus Zug-Druck-Stange 1 bzw. der gemeinsamen Baugruppe 26 diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1 bis 18 gezeigten Ausführungen den Gegenstand von eigenständigen Lösungen bilden. Die diesbezüglichengen Aufgaben und Lösungen sind den Detailbeschreibungen dieser Figuren zu entnehmen.

### BEZUGSZEICHENLISTE

- 1: Zug-Druck-Stange
- 2: Befestigungsvorrichtung
- 3: Befestigungsvorrichtung
- 4: Anschlussstück
- 5: Rastvorrichtung
- 6: Kupplungselement
- 7: Kupplungselement
- 8: Schaft
- 9: Schaft
- 10: Rastelement
- 11: Rastelement
- 12: Rastelement
- 13: Druckscheibe
- 14: Gewindeanordnung
- 15: Gewindeanordnung
- 16: Stimende
- 17: Stimende
- 18: Abflachung
- 19: Gegenfläche
- 20: Fortsatz
- 21: Ausnehmung
- 22: Ende
- 23: Stützschulter
- 24: Ende
- 25: Schulter
- 26: Baugruppe
- 27: Endabschnitt
- 28: Außengewinde
- 29: Innengewinde
- 30: Aufnahmeraum
- 31: Außengewinde
- 32: Ende
- 33: Innengewinde
- 34: Durchgangsöffnung
- 35: Mittelteil
- 36: Schaftende
- 37: Anschlagelement
- 38: Ende
- 39: Ende
- 40: Zwischenstück
- 41: Rastelement
- 42: Rastelement
- 43: Schaftfortsatz
- 44: Aufnahmeraum
- 45: Stützring
- 46: Dichtung
- 50: Schnappbolzen
- 51: Stift
- 52: Hebelarm
- 53: Schnappring
- 54: Hinterschneidung
- 55: Abflachung
- 56: Außengewinde
- 57: Innengewinde
- 58: Gewindeanordnung
- 59: Anschlagelement
- 60: Bohrung

## Patentansprüche

1. Zug-Druck-Stange (1) umfassend:
ein Mittelteil (35) mit in Axialrichtung voneinander distanzierten Enden (38, 39);
eine Befestigungsvorrichtung (2) mit einem Kupplungselement (6) und einem daran angeordneten Schaft (8);
ein Anschlussstück (4) zur Befestigung an einem Ende (38) des Mittelteils (35) mit in Axialrichtung voneinander distanzierten Stirnenden (16,17), wobei die Befestigungsvorrichtung (2, 3) zur Längenveränderung der Zug-Druck-Stange (1) über eine Gewindeanordnung (14, 15) drehbar mit dem Anschlussstück (4) verbunden ist;
eine weitere Befestigungsvorrichtung (3) mit einem Kupplungselement (7) und einem daran angeordneten Schaft;
ein Zwischenstück (40) unter dessen Zwischenschaltung die weitere Befestigungsvorrichtung (3) mit dem anderen Ende (39) des Mittelteils (35) verbunden ist, wobei die weitere Befestigungsvorrichtung (3) an ihrem Schaft (9) ein Außengewinde (56) aufweist, welches mit einem am Zwischenstück (40) ausgebildeten Innengewinde (57) drehbar verbunden ist und die beiden Gewinde (56, 57) eine weitere Gewindeanordnung (58) ausbilden;
eine Rastvorrichtung (5) mit in axialer Richtung gesehen jeweils einander zugewendeten sowie zusammenwirkenden ersten und zweiten Rastelementen (41, 42), welche mittels eines Federelements (12) aneinander gedrückt sind, wobei das erste Rastelement (41) der Rastvorrichtung (5) drehfest mit dem Anschlussstück (4) verbunden ist und das zweite Rastelement (42) drehfest mit an der Befestigungsvorrichtung (2) angeordnet ist,
**dadurch gekennzeichnet, dass**
das Federelement (12) mit seinem ersten Ende (22) an einer am Anschlussstück (4) ausgebildeten Stützschulter (23) und mit seinem zweiten Ende (24) am zweiten Rastelement (42) abgestützt ist und dabei die Rastelemente (41,42) die Drehbewegung der Befestigungsvorrichtung (2) relativ bezüglich dem Anschlussstück (4) in einer Mehrzahl von Drehstellungen mit einer vorbestimmten Verriegelungskraft lösbar arretieren; und
das Außengewinde (56) der weiteren Befestigungsvorrichtung (3) in axialer Richtung der Zug-Druck-Stange (1) über einen längeren Bereich entlang der weiteren Befestigungsvorrichtung (3) ausgebildet ist als die Gewindeanordnung (14) entlang der ersten Befestigungsvorrichtung (2).

2. Zug-Druck-Stange (1) nach einem der vorhergehenden Ansprüche, **dadurch gekennzeichnet, dass** das Anschlussstück (4) auf der vom Kupplungselement (6) abgewendeten Seite mit einem Außengewinde (31) versehen ist.

3. Zug-Druck-Stange (1) nach einem der vorhergehenden Ansprüche, **dadurch gekennzeichnet, dass** die weiteren Befestigungsvorrichtung (3) in axialer Richtung der Zug-Druck-Stange (1) länger ausgebildet ist als die erste Befestigungsvorrichtung (2).

4. Zug-Druck-Stange (1) nach einem der vorhergehenden Ansprüche, **dadurch gekennzeichnet, dass** der Schaft (8) der weiteren Befestigungsvorrichtung (3) das vom zweiten Kupplungselement (7) abgewendete Stimende des Zwischenstücks (40) durchragt und an einem Schaftende zumindest ein radial vorragendes Anschlagelement (59) angeordnet und mit dem Schaft (8) verbunden ist.

5. Zug-Druck-Stange nach einem der vorhergehenden Ansprüche,
**dadurch gekennzeichnet, dass** der Schaft (8) der ersten Befestigungsvorrichtung (2) und/oder der Schaft der weiteren Befestigungsvorrichtung (3) eine sich entlang der Axialrichtung der Zug-Druck-Stange (1) erstreckende innenliegende Bohrung (60) aufweist.

## Claims

1. Push-pull link bar (1) comprising:
a centre part (35) with ends (38, 39) which are spaced apart from one another in the axial direction;
a fastening apparatus (2) with a coupling element (6) and a shank (8) which is arranged thereon;
a connection piece (4) for fastening to one end (38) of the centre part (35), with end faces (16, 17) which are spaced apart from one another in the axial direction, the fastening apparatus (2, 3) being connected rotatably to the connection piece (4) for changing the length of the push-pull link bar (1) via a threaded arrangement (14, 15),
a further fastening apparatus (3) with a coupling element (7) and a shank which is arranged thereon;
an intermediate piece (40), with the connection in between of which the further fastening apparatus (3) is connected to the other end (39) of the centre part (35), the further fastening apparatus (3) having, on its shank (9), an external thread (56) which is connected rotatably to an internal thread (57) which is formed on the intermediate piece (40), and the two threads (56, 57) forming a further threaded arrangement (58) ;
a latching apparatus (5) with first and second latching elements (41, 42) which interact, face one another in each case as viewed in the axial direction, and are pressed against one another by means of a spring element (12), the first latching element (41) of the latching apparatus (5) being connected fixedly to the connection piece (4) so as to rotate with it, and the second latching element (42) being arranged fixedly on the fastening apparatus (2) so as to rotate with it,
**characterized in that**
the spring element (12) is supported with its first end (22) on a supporting shoulder (23) which is formed on the connection piece (4) and with its second end (24) on the second latching element (42), and in the process the latching elements (41, 42) releasably lock the rotational movement of the fastening apparatus (2) with a predefined locking force in a relative manner with regard to the connection piece (4) in a plurality of rotary positions; and
the external thread (56) of the further fastening apparatus (3) is formed in the axial direction of the push-pull link bar (1) over a longer region along the further fastening apparatus (3) than the threaded arrangement (14) along the first fastening apparatus (2).

2. Push-pull link bar (1) according to one of the preceding claims, **characterized in that** the connection piece (4) is provided with an external thread (31) on the side which faces away from the coupling element (6).

3. Push-pull link bar (1) according to one of the preceding claims, **characterized in that** the further fastening apparatus (3) is of longer configuration in the axial direction of the push-pull link bar (1) than the first fastening apparatus (2).

4. Push-pull link bar (1) according to one of the preceding claims, **characterized in that** the shank (8) of the further fastening apparatus (3) penetrates that end face of the intermediate piece (40) which faces away from the second coupling element (7), and at least one radially protruding stop element (59) is arranged at one shank end and is connected to the shank (8).

5. Push-pull link bar according to one of the preceding claims, **characterized in that** the shank (8) of the first fastening apparatus (2) and/or the shank of the further fastening apparatus (3) have/has an inner bore (60) which extends along the axial direction of the push-pull link bar (1).

## Revendications

1. Barre de traction-compression (1) comprenant :
une partie centrale (35) avec des extrémités (38, 39) espacées l'une de l'autre dans la direction axiale ;
un dispositif de fixation (2) comprenant un élément d'accouplement (6) et une tige disposée sur celui-ci (8) ;
une pièce de raccordement (4) pour la fixation à une extrémité (38) de la partie centrale (35) avec des extrémités frontales (16, 17) espacées l'une de l'autre dans la direction axiale, le dispositif de fixation (2, 3) étant connecté de manière rotative à la pièce de raccordement (4) par le biais d'un agencement fileté (14, 15) pour faire varier la longueur de la barre de traction-compression (1);
un dispositif de fixation supplémentaire (3) comprenant un élément d'accouplement (7) et une tige disposée sur celui-ci ;
une pièce intermédiaire (40) dont l'interposition permet de connecter le dispositif de fixation supplémentaire (3) à l'autre extrémité (39) de la partie centrale (35), le dispositif de fixation supplémentaire (3) présentant au niveau de sa tige (9) un filetage extérieur (56) qui est connecté de manière rotative à un filetage intérieur (57) réalisé sur la pièce intermédiaire (40) et les deux filetages (56, 57) constituant un agencement fileté supplémentaire (58) ;
un dispositif d'encliquetage (5) avec, vu dans la direction axiale, des premier et deuxième éléments d'encliquetage (41, 42) à chaque fois tournés l'un vers l'autre et coopérant l'un avec l'autre, qui sont pressés l'un contre l'autre moyen d'un élément de ressort (12), le premier élément d'encliquetage (41) du dispositif d'encliquetage (5) étant connecté de manière solidaire en rotation à la pièce de raccordement (4) et le deuxième élément d'encliquetage (42) étant disposé de manière solidaire en rotation au niveau du dispositif de fixation (2),
**caractérisée en ce que**
l'élément de ressort (12) est supporté avec sa première extrémité (22) au niveau d'un épaulement de support (23) réalisé au niveau de la pièce de raccordement (4) et avec sa deuxième extrémité (24) au niveau du deuxième élément d'encliquetage (42) et les éléments d'encliquetage (41, 42) bloquant en l'occurrence avec une force de verrouillage prédéterminée de manière desserrable le mouvement de rotation du dispositif de fixation (2) relativement par rapport à la pièce de raccordement (4) dans une pluralité de positions de rotation; et
le filetage extérieur (56) du dispositif de fixation supplémentaire (3) étant réalisé dans la direction axiale de la barre de traction-compression (1) sur une plus longue région le long du dispositif de fixation supplémentaire (3) que l'agencement fileté (14) le long du premier dispositif de fixation (2).

2. Barre de traction-compression (1) selon l'une quelconque des revendications précédentes, **caractérisée en ce que** la pièce de raccordement (4) est pourvue d'un filetage extérieur (31) sur le côté opposé à l'élément d'accouplement (6).

3. Barre de traction-compression (1) selon l'une quelconque des revendications précédentes, **caractérisée en ce que** le dispositif de fixation supplémentaire (3) est réalisé de manière plus longue dans la direction axiale de la barre de traction-compression (1) que le premier dispositif de fixation (2).

4. Barre de traction-compression (1) selon l'une quelconque des revendications précédentes, **caractérisée en ce que** la tige (8) du dispositif de fixation supplémentaire (3) traverse l'extrémité frontale de la pièce intermédiaire (40) opposée au deuxième élément d'accouplement (7) et au moins un élément de butée faisant saillie radialement (59) est disposé au niveau d'une extrémité de tige et est connecté à la tige (8).

5. Barre de traction-compression (1) selon l'une quelconque des revendications précédentes, **caractérisée en ce que** la tige (8) du premier dispositif de fixation (2) et/ou la tige du dispositif de fixation supplémentaire (3) présente(nt) un alésage (60) situé à l'intérieur et s'étendant le long de la direction axiale de la barre de traction-compression (1).
